(19) Europäisches Patentamt / European Patent Office / Office européen des brevets

(11) **EP 2 960 210 A1**

(12) **EUROPEAN PATENT APPLICATION**

(43) Date of publication:
**30.12.2015 Bulletin 2015/53**

(21) Application number: **14174098.5**

(22) Date of filing: **26.06.2014**

(51) Int Cl.:
*C02F 1/00* (2006.01)   *C02F 1/28* (2006.01)
*C02F 1/42* (2006.01)   *B01D 35/143* (2006.01)
*C02F 1/32* (2006.01)   *C02F 1/78* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Electrolux Appliances Aktiebolag
105 45 Stockholm (SE)**

(72) Inventor: **Bertoni, Cristina
I-33080 Porcia (PN) (IT)**

(74) Representative: **Maccalli, Marco et al
Maccalli & Pezzoli S.r.l.
Via Settembrini, 40
20124 Milano (IT)**

(54) **Pitcher having a smart indicator of a filter condition thereof**

(57) A liquid container **(400)** for containing a liquid is proposed. The liquid container **(400)** comprises a seat **(148)** for housing a liquid filtering unit **(139)** adapted to filter said liquid, a flowing section **(148),** through which said liquid is made to flow, and a sensing arrangement comprising at least one probe element **(457)** responsive to the presence of liquid and coupled or couplable with a data processing element **(442).** The liquid container further comprises a liquid flow-regulating element **(139; 460)** associated with the flowing section **(148)** and adapted to impose a predetermined flow rate *(ff, ff', fr)* to a flow of liquid flowing through the flowing section **(148)** and wherein the sensing arrangement is configured to measure a time interval *(ti, t'$_j$, t''$_k$)* during which the liquid flows through the flowing section **(148)** at said predetermined flow rate, the data processing element **(442)** being configured to calculate a volume *(Vol$_i$, Vol'$_j$, Vol''$_k$)* of liquid flowed through the flowing section **(148)** based on the measured time interval *(ti, t'$_j$, t''$_k$)* and the predetermined flow rate *(ff, ff', fr),* said volume of flowed liquid being related to the volume of liquid filtered by said liquid filtering unit.

FIG.4

EP 2 960 210 A1

**Description**

The present invention generally relates to containers for liquids such as pitchers, or carafes (denoted only as pitcher hereinafter, for sake of conciseness), adapted to store a drinkable liquid (e.g., water). More particularly, the invention relates to pitchers comprising a filter element adapted to filter the drinkable liquid. Even more particularly, the solution refers to pitchers comprising an arrangement adapted to determine an exhaustion of the filter element.

Pitchers comprising a filter element - filtering pitchers hereinafter, for sake of conciseness - have reached a widespread diffusion since allow having good quality drinkable water from the tap water regardless of a water piping, and more generally of a water supply system condition. Typically, filtering pitchers comprise a first tank in which tap water (or other liquid) is introduced, and a second tank in which the filtered water is collected. The two tanks are fluidly connected by the filter element, which filters the water from the first tank before allowing it in the second tank.

Indeed, the filter element, which usually comprises active carbons and optionally ion-exchange resins, filters water introduced in the pitcher improving the water quality. In particular, active carbons remove or at least reduce the concentration of, contaminants like chlorine (Cl) and its by-products, suspended solids, heavy metals such as lead (Pb), pharmaceuticals, while ion-exchange resins currently used in commercial filters associated to pitchers reduce the concentration of calcium (Ca) and magnesium (Mg) ions thus reducing water hardness. The filtered water results to have a better taste, and also bad odors result to be reduced.

The filter element exhausts (i.e., the filtering capability of the filter element reaches a minimum) after having filtered a predetermined quantity of water according to a structure/size of the filter element and the quality of the inlet water (e.g., from tens to hundreds of liters). Therefore, the filter elements are designed as removable (disposable) elements, such as a cartridge, in order to be removed from the pitcher once exhausted, and the pitcher is provided with a seat for the filter element, usually positioned between the first tank and the second tank.

In order to let a user of the filtering pitcher know when the filter element is exhausted (in order to replace it with a new filter element), usually the filtering pitcher is provided with a sensing arrangement, simply filter indicator hereinafter, which is adapted to provide a signal (e.g., a visual signal) to the user of the filter element exhaustion.

The simplest filter indicators known in the art comprise a timer that is reset at the provision of a new filter element and which is adapted to signal the filter element exhaustion after the expiry of a predetermined time period (e.g. a month). This kind of filter indicators is very inaccurate, since they do not measure an effective usage of the filter element during the time period.

More refined filter indicators, also known in the art, comprise (as an alternative or in addition to the timer) means adapted to estimate a filter element exhaustion by detecting each time that water is introduced in the container and estimating that the container has been completely filled. Therefore, the filter indicator estimates that the filter element is exhausted for having filtered a maximum volume of water, when a number of times water is introduced in the container multiplied by the volume of the container equals such maximum volume.

Anyway, the indication of filter element exhaustion based on time or number of fillings of the pitcher result to be a very inaccurate evaluation. Moreover, the quality of the water to be filtered is not considered whereas the filtering capability of the filter element not only depends on the time period the filter element has been in use and/or on the quantity of water treated but also on the water quality.

In the art, exhaustion monitoring methods have been proposed in order to provide a more accurate indication of filter elements exhaustion. For example, European Patent N. EP 1484097 proposes a method of determination of the conditions of exhaustion of a filtering cartridge for filtering carafes with replaceable cartridges, in which an initial identification of impedance of the water to be filtered is provided for in order to consequently calculate an important parameter for definition of the efficient lifespan on the filtering cartridge. The proposed method requires a filtering pitcher provided with a plurality of sensing arrangement deployed in different positions within the pitcher, and/or a dedicated receptacle for them. This results in a more complex manufacturing of the pitcher (e.g., for providing the sensor and for wiring them to a control unit).

US Patent N. 8,171,802 proposes a method of measurement of the volume of the flow-rate of electrically conductive liquids the conductivity of which is at least codetermined by at least one parameter, wherein the liquid flows through a vessel having a predetermined shape, and wherein the respective filling volume is determined by at least one measured value, which is measured by an electrical conductivity measuring device comprising electrodes, wherein the vessel is filled in succession and then is emptied through its outlet, through which the filling heights h are constantly changing. At least one reference table comprising calibration measured values and filling volumes belonging to them is constructed by means of calibration measurements using several liquid samples, which have different parameter values and different filling heights in the vessel. The measured values are measured in time intervals and the respective filling volumes are determined by comparison of the respective measured values with values of the table, and the volume of the rate of flow is determined from the filling volumes over a time period. The measuring device for the determination of the volume of flow rate of electrically conductive liquids through a vessel comprises at least two measuring electrodes.

The proposed method which is based on the ratiometric principle already known in the scientific literature as a level sensing technique, once applied to a container, requires a filter indicator comprising a control unit featuring a memory element adapted to store the data of the table, which has to be continuously accessed while performing the proposed measuring method. Moreover, the mechanical features of the measuring device, in particular the shape and technical details of the electrodes, need to be adapted to the shape of the vessel when one type of measuring device is used in different vessels. Therefore, data of the table depends on the shape of the vessel and have to be provided for each different design of the vessel.

The Applicant has found a simpler approach to provide a satisfactory solution for determining the exhaustion of the filter element with adequate precision. In particular, the Applicant has found that it is possible to simply and properly evaluate a volume of the liquid filtered by the filtering pitcher based on the record of a time duration for which a sensing device or arrangement detects a liquid flowing at a predetermined flow rate regardless of the shape of the vessel. One or more aspects of the solution according to embodiments of the invention are set out in the independent claims, with advantageous features of the same solution that are indicated in the dependent claims.

An aspect of the solution according to one or more embodiments of the present invention relates to a liquid container for containing a liquid. The liquid container comprises a seat for housing a liquid filtering unit adapted to filter said liquid, a flowing section, through which said liquid is made to flow, and a sensing arrangement comprising at least one probe element responsive to the presence of liquid and coupled or couplable with a data processing element. In the solution according to an embodiment of the present invention, the liquid container further comprises a liquid flow-regulating element associated with the flowing section and adapted to impose a predetermined flow rate to a flow of liquid flowing through the flowing section, and wherein the sensing arrangement is configured to measure a time interval during which the liquid flows through the flowing section at said predetermined flow rate, the data processing element being configured to calculate a volume of liquid flowed through the flowing section based on the measured time interval and the predetermined flow rate, said volume of flowed liquid being related to the volume of liquid filtered by said liquid filtering unit.

In an embodiment of the invention, the flow-regulating element comprises the liquid filtering unit.

In an embodiment of the invention, the liquid container further comprises an inlet for introducing a liquid in the liquid container, said inlet communicating with a liquid pre-filtering tank, and a liquid collection tank downstream the liquid pre-filtering tank with respect to said inlet and in fluid communication with said liquid pre-filtering tank through the flowing section, the flowing section being adapted to act as the seat of the liquid filtering unit, and the probe element comprises a sensing end positioned in correspondence of an upper surface of the liquid filtering unit when placed in the flowing section in such a way to be submerged by liquid of the flow flowing through the flowing section during said time interval.

In an embodiment of the invention, the flowing section comprises an outlet conduit fluidly connecting a liquid collection tank with a dispensing outlet of the liquid container, and the flow-regulating element is provided in a position along the outlet conduit, and the sensing element comprises a sensing end provided downstream the flow-regulating element in such a way to be submerged by liquid of the flow flowing through the flowing section during said time interval at a predetermined flow-rate.

In an embodiment of the invention, the liquid container further comprises an inlet for introducing a liquid in the liquid container, wherein said liquid receiver tank is downstream, with respect of said inlet, the seat is adapted to house the liquid filtering unit.

In an embodiment of the invention, the probe element comprises at least one pair of conductive rods, an insulating casing adapted to enclose the rods leaving an end of each rod exposed, the ends of the rods defining said sensing end of the probe element, and a coupling end, opposite to the sensing end, operatively coupled or couplable with said data processing element.

In an embodiment of the invention, the probe element comprises at least one pair of conductor elements, insulating elements adapted to electrically insulate the conductor elements from the environment surrounding the probe element, each conductor element comprising a respective fingered electrode that defines said sensing end of the probe element, and a coupling end opposite to the sensing end operatively coupled or couplable with said data processing element, and the fingered electrodes are interdigited and electrically insulated one with respect to the other.

In an embodiment of the invention, the liquid container further comprises a support having a body comprising a rest surface adapted to stand on a support plan, a contact surface opposite to the rest surface and separated from the latter by a side surface, and a vessel-like element comprising said flowing section, the contact surface is adapted to couple with a bottom portion of the vessel-like element.

In an embodiment of the invention, the support comprises the data processing element and the sensing arrangement further comprises a communication unit, the communication unit being adapted to wirelessly communicate at least said time interval to the data processing element.

In an embodiment of the invention, the sensing arrangement is configured to provide liquid-related information regarding the liquid in addition to said measure of the time interval.

In an embodiment of the invention, the data processing element is further configured to calculate an adjusted volume on the basis of said volume and on the liquid-related information obtained by the sensing arrangement, in order to evaluate said total volume of liquid flowed through said flow-regulating element, wherein said adjusted volume is calculated by applying to said volume a corrective factor taking account of at least one of the following liquid-related information: a conductivity of the liquid, a temperature of the liquid, an impedance of the liquid, a hardness of the liquid, a pH of the liquid, a transmittance of the liquid, and a turbidity of the liquid.

In an embodiment of the invention, the liquid filtering unit comprises a removable liquid filtering unit, and the data processing element is configured to evaluate an exhaustion of said removable liquid filtering unit based on a total volume of liquid flowed through said flow-regulating element starting from a provision of the removable filtering unit in the liquid container.

In an embodiment of the invention, the liquid container comprises a filtering pitcher adapted to filter a drinkable liquid.

A different aspect of the present invention proposes a method for evaluating a volume of liquid made to flow through a flowing section of a liquid container, the method comprising the steps of: imposing a predetermined flow rate to a flow of liquid flowing through the flowing section, measuring a time interval for which there is a flow of liquid flowing through the flowing section at said predetermined flow rate, and calculating a volume of the liquid that has flowed through the flowing section based on said measured time interval and said predetermined flow rate.

In an embodiment of the invention, the method further comprises the following steps: calculating a total volume of liquid that has flowed out through the flowing section, comparing the total volume with a volume threshold, and whether the total volume is greater than the volume threshold, providing an indication of the reaching/trespassing of said volume threshold.

These and other features and advantages of the present invention will be made apparent by the following description of some exemplary and non-limitative embodiments thereof. For its better intelligibility, the following description should be read making reference to the attached drawings, wherein:

**Figure 1A** is a perspective view of a liquid container comprising a sensing arrangement according to an embodiment of the invention;
**Figure 1B** is a cross-sectional view of the liquid container of **Figure 1A;**
**Figures 2A** and **2B** are schematic views of a conductivity probe adapted to obtain a liquid conductivity indication according to an embodiment of the invention, and
**Figures 3A** and **3B** are schematic views of another conductivity probe adapted to obtain a liquid conductivity indication;
**Figure 4** and is a cross-sectional side view of another liquid container comprising a sensing arrangement according to another embodiment of the present invention;
**Figure 5** is a cross-sectional side view of yet another liquid container comprising a sensing arrangement according to another embodiment of the present invention,;
**Figure 6A - 6C** are a perspective view, and cross-sectional side views of a liquid container comprising a control support according to different embodiments of the present invention.

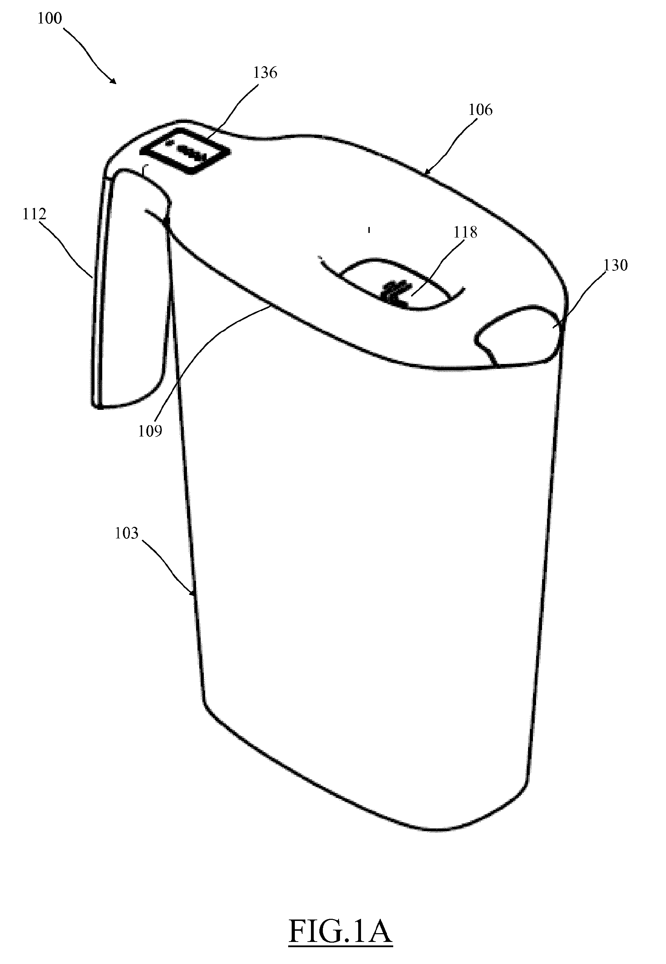

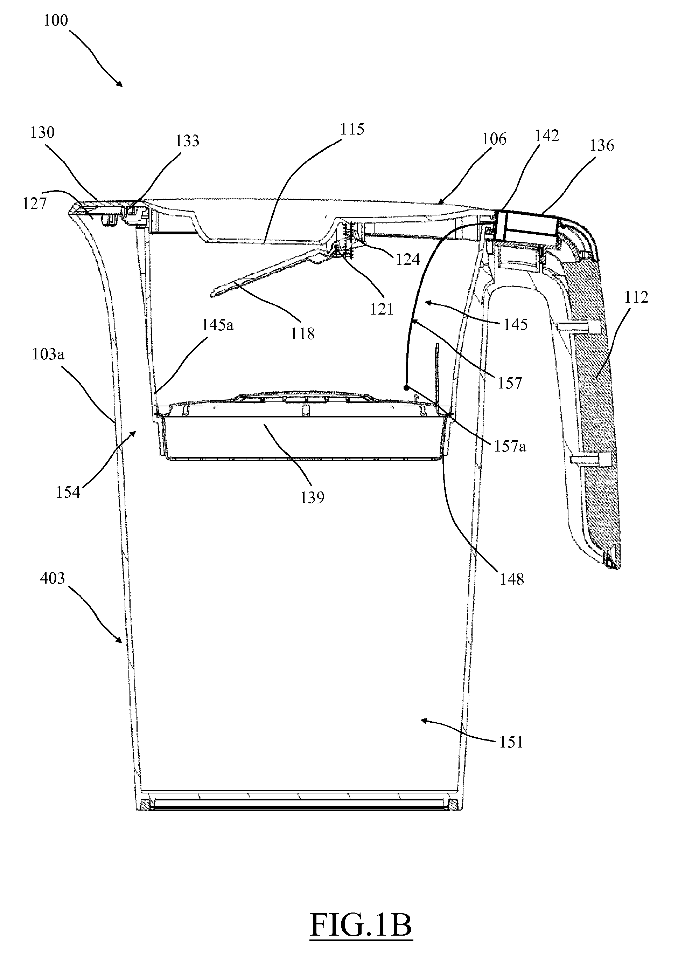

With reference to the figures, **Figures 1A** and **1B** are a perspective view and cross sectional side view, respectively, of a liquid container such as for example a filtering pitcher (or carafe) **100** according to an embodiment of the present invention may be implemented.

The filtering pitcher **100** comprises a pitcher body **103** and a pitcher lid **106** adapted to be coupled with the pitcher body **103** in such a way to close a top aperture **109** thereof.

The pitcher body **103** is a vessel-like element adapted to contain a liquid, for example a drinkable liquid such as water. The pitcher body **103** may be made of any suitable material such as for example plastic or glass.

Preferably, the filtering pitcher **100** further comprises a seizure element, such as a handle **112** for allowing a user to easily hold and operate the filtering pitcher **100**. In one embodiment of the invention, the handle **112** is at least partly provided as a single piece with the pitcher body **103** *(i.e.,* the handle **112** is at least partly comprised in the pitcher body **103).** In another embodiment of the present invention, the handle is detachable from the pitcher body.

The pitcher lid **106** comprises an inlet opening **115** adapted to introduce a liquid in the filtering pitcher **100**. Preferably, the inlet opening **115** is provided substantially at a central portion of the pitcher lid **106.**

Preferably, the inlet opening **115** is closable by an inlet lid **118**. For example, the inlet lid **118** is pivotally coupled with the pitcher lid **106** at a border of the inlet opening **115**. Such a pivotally coupling may be achieved by means of an inlet hinge arrangement **121,** for example comprising matching coupling elements provided in the pitcher lid **106** at the border of the inlet opening **115** and at a corresponding border of the inlet lid **118** adapted to pivotally snap-fit with each other.

Preferably, the hinge arrangement **121** comprises a self-closure element **124** adapted to automatically maintain the inlet lid **118** in a closed position *(i.e.,* closing the inlet opening **115).** For example, the self-closure element **124** comprises a compression spring that in a rest condition maintains the inlet lid **118** in the closed position. Even more preferably, the self-closure element **124** is designed in such a way to let the inlet lid **118** open when a liquid is poured over it.

The pitcher lid **106** further comprises a dispensing outlet such as an outlet opening **127** adapted to pour filtered liquid out of the filtering pitcher **100**. Preferably, outlet opening **127** is provided at an end of the pitcher lid **106** opposite to the handle **112,** when the pitcher lid **106** is coupled with the pitcher body **103**.

Preferably, the outlet opening **127** is closable by an outlet cap **130**. For example, the outlet cap **130** is pivotally coupled with the pitcher lid **106** at a border of the outlet opening **127**. Such a pivotally coupling may be achieved by means of an outlet hinge arrangement **133,** for example comprising matching coupling elements provided in the pitcher lid **106** at the border of the outlet opening 127 and at a corresponding border of the outlet cap **130** adapted to pivotally snap-fit with each other.

Advantageously, the outlet cap **130** may be designed in order to maintain a closed position, closing the outlet opening **127** when the filtering pitcher **100** is in a rest position (*e.g.*, standing on a surface such as for example a table top). At the same time the outlet cap **130** and its outlet hinge arrangement **133** are designed to switch to an open position when the filtering pitcher **100** is tilted in order to pour the filtered liquid out of the pitcher body **103** and/or by the weight of the filtered liquid poured out of the pitcher body **103**.

Preferably, although not necessarily, the filtering pitcher **100** further comprises a user interface **136** adapted to provide an indication of a condition (e.g., useful life left, number of filtering operation left to be performed, *etc.*) of a (preferably disposable) removable liquid filtering unit **139** (described in the following) used to filter the liquids introduced into the filtering pitcher **100** and receiving inputs *(e.g.,* the indication of the provision of a new removable liquid filtering unit **139)** by a user (not shown).

For example, the user interface **136** may be provided in the pitcher body **103** in proximity of the handle **112** thereof; alternatively, the user interface **136** may be provided on the pitcher lid **106**.

The operation of the user interface **136** is managed by a data processing element, such as a control unit **142** which comprises electric and/or electronic elements (known in the art and not herein detailed for the sake of conciseness) adapted to receive and process information (as described below) about the condition of the removable liquid filtering unit **139** or other parameters of interest related to the liquid (or liquid-related information) contained in the filtering pitcher **100** (e.g. water hardness, chlorine content, etc.) and provide the condition indication to the user interface **136,** and also to receive inputs provided by the user through the user interface **136**.

In an embodiment of the invention, the control unit **142** may be provided within the pitcher body **103** beneath the user interface **136** to which is electrically coupled, or formed as a single piece, with; alternatively, the control unit **142** may be provided within the filter lid **106**. In other embodiments of the present invention the control unit may be provided in a different position (as described in further detail below).

Within the pitcher body **103** - preferably in an upper portion thereof -, a (liquid) pre-filtering tank **145** is provided for receiving the liquid introduced into the pitcher body **103** through the inlet opening **115**. The pre-filtering tank **145** may either be formed as a one-piece element with the pitcher body **103** or as a separate element to be coupled with the pitcher body **103**. In an alternative embodiment, the pre-filtering tank **145** may either be formed as a one-piece element with the pitcher lid **106** or as a separate element to be coupled with the pitcher body **103**.

The pre-filtering tank **145** comprises a lower aperture **148** fluidly connecting the pre-filtering tank **145** with the pitcher body **103**. Advantageously, the lower aperture **148** is designed in such a way to act as a seat for the removable liquid filtering unit **139;** particularly, the removable liquid filtering unit **139** completely closes the lower aperture **148** once it is inserted therein.

With such a structure of the filtering pitcher **100,** all the liquid introduced into the pre-filtering tank **145** is made to flow through lower aperture **148,** which acts as a (regulated) flowing section for the filtering pitcher **100,** and passes through the removable liquid filtering unit **139** and is thereby filtered before leaving the pre-filtering tank **145** by gravity. Thus, filtered liquid leaves the removable liquid filtering unit **139** and reaches a lower portion of the pitcher body **103** that acts as a (liquid) collection tank **151** for the filtered liquid.

The collection tank **151** is fluidly connected to the outlet opening **127** by means of an outlet conduit **154**. Such outlet conduit **154** is defined by a portion of a body sidewall **103a** of the pitcher body **103** and by a portion of a tank sidewall **145a** of the pre-filtering tank **145**.

In order to improve the quality of the liquid introduced in the filtering pitcher **100,** the removable liquid filtering unit **139** comprises an active carbon filter and (possibly) a ion-exchange resin. Thus the removable liquid filtering unit **139** filters liquid introduced in the pre-filtering tank **145** removing, or at least reducing the concentration of, contaminants like chlorine (Cl) and its by-products, suspended solids, heavy metals such as lead (Pb), pharmaceuticals, and also removing part of dissolved calcium (Ca) and magnesium (Mg) ions thus reducing liquid hardness, before the filtered liquid is collected in the collection tank **151**.

Both the active carbon filter and the ion-exchange resin comprised in the removable liquid filtering unit **139** have a limited duration, or useful life. Particularly, expired such useful life the filtering capability of the removable liquid filtering unit **139** drops below a minimum predetermined level under which the removable liquid filtering unit **139** is deemed to be unable to adequately filter the liquid introduced into the filtering pitcher **100**. The useful life of the removable liquid filtering unit **139** depends on the number of filtering operations performed and the overall operation time the removable liquid filtering unit **139** has been in use. The overall operation time may be simply determined by implementing a timer element (such as a timer/watchdog circuit) within a (data) processing element, such as for example the control unit **142** mentioned above, that may be coupled with or provided in the filtering pitcher **100**. Preferably, the processing element is configured to instruct the user interface **136** to output a filter exhaust (user-readable) signal when the timer element reaches a timeout condition.

As known, a number of filtering operations that can be efficiently performed by the removable liquid filtering unit **139** is heavily affected by the characteristics (in terms of diluted or suspended particles) of the liquid to be filtered.

In the embodiments according to the present invention, one or more sensing arrangements may be provided in the filtering pitcher **100** in order to provide liquid-related information useful to provide a correct indication of the removable liquid filtering unit **139** condition and/or in order to provide other water filtering process parameters of interest to the user. Non-limitative examples of sensing arrangements that may be implemented in a filtering pitcher **100** according to the present invention are: liquid conductivity sensor, water hardness sensor, impedance sensor, pH sensor, transmittance sensor, and turbidity sensor.

In one embodiment of the present invention, a probe element **157** is provided coupled with the control unit **142**. The probe element **157** coupled (*e.g.*, electrically) with the control unit **142** provide a sensing arrangement adapted to obtain a liquid-related information (*e.g.*, information related to the conductivity of the liquid).

Preferably, the probe element **157** is provided at least partly within the pre-filtering tank **145** of the filtering pitcher **100**.

In one embodiment according to the present invention, the probe element **157** extends from the control unit **142** into the pre-filtering tank **145** with a sensing (free) end **157a** that reaches a bottom portion **145a** of the pre-filtering tank **145**. In this way, the sensing end **157a** of the probe element **157** is placed in correspondence of (e.g., substantially at the same level or just above) an upper surface of the removable liquid filtering unit **139** when the latter is placed in the lower aperture **148**.

In the solution according to an embodiment of the invention, the probe element **157** is used together with the control unit **142** in order to evaluate also the quantity (*e.g.*, a volume) of liquid filtered by the removable liquid filtering unit **139**.

Thanks to the position of the sensing end **157a** at the bottom portion **145a** of the pre-filtering tank **145,** whenever the pre-filtering tank **145** is provided with liquid by a user, the sensing end **157a** of the probe element **157** results to be submerged by the liquid substantially for a time interval $t_i$ after which the liquid completely leaves the pre-filtering tank **145** through the removable liquid filtering unit **139** (being filtered by it) and drops down into the collection tank **151**. Therefore, the control unit **142** may be configured to measure each generic time interval $t_i$ during which the liquid is being filtered by the removable liquid filtering unit **139**.

In order to evaluate a generic volume $Vol_i$ ($i = 1,...,I$; $I \geq 0$) of liquid filtered by the removable liquid filtering unit **139** (i.e., a volume of liquid that flowed out of the pre-filtering tank **145**) during a corresponding time interval $t_i$, the latter is multiplied by a filtering rate *ff* of the removable liquid filtering unit **139** that is stored in a storage portion (such a binary memory element, not detailed in the figures) preferably comprised in the control unit **142**. In other words, the removable liquid filtering unit **139** acts as a flow-regulating element that determines the liquid flow between the pre-filtering tank **145** and the collection tank **151** by means of its the filtering rate *ff*.

The filtering rate *ff* is known *(e.g.,* determined during the manufacturing of removable liquid filtering units **139** by analyzing a representative sample of removable liquid filtering units); preferably, the filtering rate *ff* is constant, such as for example a predetermined value corresponding to a (mean) flow rate *(e.g.,* in terms of liters per second) at which the generic removable liquid filtering unit **139** is able to filter the liquid. The generic equivalent volume $Vol_i$ is thus given by the integral over the time of the filtering rate *ff*. By assuming a filtering rate *ff* substantially constant (*e.g.*, equal to the mean value determined over the representative sample of removable liquid filtering units), the equivalent volume $Vol_i$ may be calculated through the following formula:

$$Vol_i = t_i \times ff. \tag{1}$$

A generic adjusted volume $Volc_i$ - considering the impact of liquid quality *(e.g.,* the liquid hardness determined by a conductivity measure) on the filtering capability of the removable liquid filtering unit **139 -** may be determined by adjusting the corresponding volume $Vol_i$ through a corrective factor $\alpha_i$ that may be stored in the control unit **142,** or:

$$Volc_i = \alpha_i \times Vol_i. \qquad\qquad (2)$$

For example, the control unit **142** may comprise a look-up table storing corrective factors $\alpha_i$ calculated through data related to parameterized curves of filter performance (referred to the liquid-related information) versus filtered volume; the corrective factor $\alpha_i$ may be selected on the basis of the liquid-related information obtained through the sensing arrangement (such as the water hardness which can be estimated by means of a liquid conductivity measure or directly by the measured liquid conductivity).

In one embodiment of the invention, an additional offset volume $V_{offset}$ may be added to the equivalent volume $Vol_i$, or to the adjusted volume $Volc_i$, if the sensor is spaced from *(e.g.,* not in contact with) the upper surface of the removable liquid filtering unit **139**. This takes into account a liquid mass that is filtered by the removable liquid filtering unit **139** but that is not sensed by the probe element **157** since is comprised between the sensing end **157a** and the upper surface of the removable liquid filtering unit **139** *(i.e.,* beneath the sensing end **157a,** and out of reach therefrom). Therefore, at each filtering cycle the control unit **142** estimates an alternative adjusted equivalent volume using the following formula:

$$Volc_i = \alpha_i \times Vol_i + V_{offset}. \qquad\qquad (3)$$

In one embodiment of the present invention (not shown), a temperature sensor (coupled to the control unit **142)** may be provided in order to measure a temperature of the liquid to be filtered since the liquid temperature affects liquid-related information such as the liquid conductivity. Therefore, the control unit **142** may be advantageously configured to use the measured temperature in order to provide a (temperature) adjusted corrective factor $\beta_i$ taking into account the effect of temperature on the liquid-related information to be used instead of the corrective factor $\alpha_i$ in the equation 2 for evaluating of the generic adjusted volume $Volc_i$.

The generic adjusted volumes $Volc_i$ of liquid filtered by the removable liquid filtering unit **139** are then added together in order to provide an estimate of a total filtered volume $Vol_T$ filtered by the removable liquid filtering unit **139** during its use in the filtering pitcher **100,** or

$$Vol_T = \sum_{i=1}^{I} Volc_i \qquad\qquad (4)$$

The total filtered volume $Vol_T$ is stored in the storage portion of the control unit **142.**

In this way, the filtering pitcher **100** according to an embodiment of the present invention is able to simply determine the total filtered volume $Vol_T$ filtered by the removable liquid filtering unit **139** at any time during its use with the filtering pitcher **100.**

The total filtered volume $Vol_T$ is compared (continuously, periodically or at any time its value is updated) with an exhaustion volume $Vol_{Ex}$ also stored in the storage portion of the control unit **142.** Such exhaustion volume $Vol_{Ex}$ corresponds to a maximum volume of liquid that can be filtered by the removable liquid filtering unit **139** before its filtering capability drops down to a predetermined value *(e.g.,* the exhaustion volume $Vol_{Ex}$ may range between 100 L and 200 L, such as $Vol_{Ex}$ = 150 L).

If the total filtered volume $Vol_T$ results to be equal to, or greater than, the exhaustion volume $Vol_{Ex}$, *i.e.* if

$$Vol_T \geq Vol_{Ex}, \qquad\qquad (5)$$

the control unit **142** determines the exhaustion of the removable liquid filtering unit **139** and accordingly instructs the user interface **136** to output a corresponding exhaustion signal. Upon the substitution of the exhausted removable liquid filtering unit **139** with a new one, the value $Vol_T$ is reset, *e.g.* by the user actuating a reset pushbutton provided in the user interface **136.**

The filtering pitcher **100** according to the present invention is thus able to simply provide a reliable evaluation of the actual wearing out of the removable filter element **139** and accordingly of the exhaustion of its filtering capability due to the reaching of the exhaustion volume $Vol_{Ex}$ simply on the basis of the filtering rate $ff$ and on the time interval $t_i$. Moreover, it is possible to take into accounts also the impacts of the liquid quality (*e.g.*, water hardness in case the liquid is water and the filter includes ion-exchange resins) estimated by the control unit **142** by means of the probe element **157** immersed in the liquid being filtered, thus obtaining a more refined estimation.

Advantageously, such an evaluation of the actual wearing out of the removable filter element **139** is performed regardless of the shape of the filtering pitcher **100** and/or of its tanks **145** and **151,** but only based on the filtering rate $ff$ of the removable filter element **139.**

It should be noted that the exhaustion volume $Vol_{Ex}$ evaluation just described may be implemented in parallel with the exhaustion time-out evaluation performed by the timer element mentioned above.

In another embodiment of the present invention, the sensing arrangement may comprise a further probe element connected to the control unit **142** and having a sensing end provided in the collection tank **151**. In this way, the liquid-related information may be detected in both the tanks **145** and **151** and compared in order to obtain a differential liquid-related information, which may be used to define a more accurate corrective factor $\alpha_i$.

Among liquid-related information obtainable through a sensing arrangement, liquid conductivity, such as water conductivity is a parameter of particular interest as it enables estimating water hardness which is an important parameter for determining a quality of the water. Therefore, in one embodiment of the present invention, a corresponding sensing arrangement may be designed to derive an indication of water conductivity either through direct contact or without contact with water.

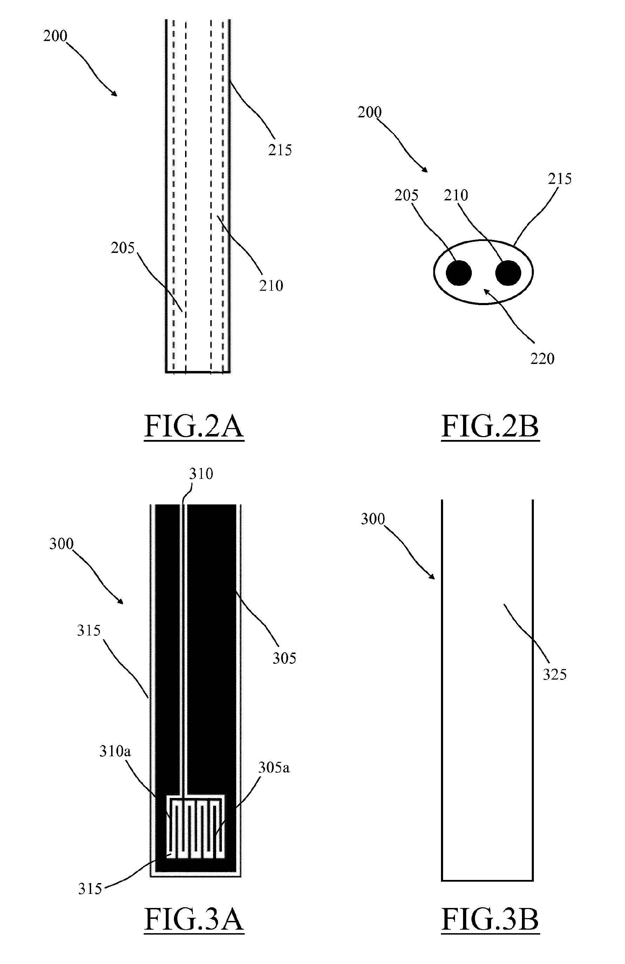

Turning to **Figures 2A** and **2B,** they are schematic views of a conductivity probe **200** adapted to obtain a liquid conductivity indication according to an embodiment of the invention.

Particularly, the conductivity probe **200** may be used as the probe element **157** in the pitcher **100** described above, in order to provide a sensing arrangement adapted to determine (as the "liquid-related information") the liquid conductivity. The results obtained by the control unit **142** through the analysis of the liquid conductivity enabled by the conductive probe **200** may be then output to the user interface **136** in order to provide a useful indication to the user.

The conductivity probe **200** comprises a couple of conductive rods **205** and **210,** enclosed in a common insulating casing **215 -** even though in other embodiments (not shown) of the present invention the conductive rods **205** and **210** may be enclosed by respective insulating casings -, such as for example a suitable plastic sheath. As can be best appreciated in **Figure 2B** that is a bottom view of the conductivity probe **200,** at a free end **220** (corresponding to the sensing end **157a** of the probe element **157**) of the conductivity probe **200** rod free ends **205a** and **210a** of the rods **205** and **210,** respectively, are exposed.

An opposite end (not shown) of the conductivity probe **200** is operatively coupled with the processing element *(e.g.,* the control unit **142),** in order to perform a measure of a liquid conductivity in which the free end **220** of the conductivity probe **200** is in contact with.

In order to measure conductivity of a liquid with which the free end **220** of the conductivity probe **200** is in contact, the processing element (to which the rods **205** and **210** are electrically coupled with) forces a voltage difference between the two rods **205** and **210.** Such voltage difference produces a corresponding electric current $I$ that passes through the liquid from a rod free end **205a** or **210a** to the other (while no current flows when the rod free end **205a** or **210a** do not contact water). The processing element is thus able to determine the conductivity of the liquid by measuring an intensity of the electric current that is substantially related by said conductivity of the liquid.

**Figures 3A** and **3B** are schematic views of another conductivity probe **300** adapted to obtain a liquid conductivity indication according to an embodiment of the invention.

Particularly, the conductivity probe **300** may be used as the probe element **157** in order to provide an alternative sensing arrangement adapted to determine the liquid conductivity and the results obtained by the control unit **142** may be output to the user interface element **136** in order to provide a useful indication to the user.

The conductivity probe **300** comprises a first conductor element **305** and a second conductor element **310.** Preferably, the first and the second conductor elements **305** and **310** comprise fingered electrodes **305a** and **310a,** the fingers of which are interdigited one with respect to the other but electrically insulated by an insulating support **315.** With such an arrangement, the first and the second conductor elements **305** and **310** define a capacitor **320** (corresponding to the sensing end **157a** of the probe element **157).**

Exposed faces of the conductor elements **305** and **310 -** opposite to coupling faces thereof by means of which the conductor elements **305** and **310** are coupled with the insulating support **315 -** are coated with a thin insulating layer **325,** such as for example a suitable coating paint or plastic layer. In this way, the capacitor **320** (and the whole conductor elements **305** and **310)** results to be completely insulated from the environment surrounding the conductivity probe **300.**

Also in this case, an opposite end (not shown) of the conductivity probe **300** is operatively coupled with the processing element *(e.g.,* the control unit **142),** in order to perform a measure of a liquid conductivity in which at least the capacitor **320** of the conductivity probe **300** is immersed.

In order to measure conductivity of a liquid in which the capacitor **320** of the conductivity probe **300** is immersed, the processing element (to which the wires **305** and **310** are electrically coupled with) feeds a predetermined oscillating electric current to the capacitor **320.** Electrical charge induced by the electrical current accumulates at the fingered free ends **305a** and **310a** thus, as known, generating an electric field in the environment in the proximity of the capacitor **320.**

When the capacitor **320** is immersed in liquid, the liquid (particularly the presence and the concentration of ion diluted in the liquid) perturbs the electric field mentioned above. Such a perturbation changes the value of an electric voltage *Vs* - determined by the electric field - between the fingered free ends **305a** and **310a** from an "air" value *(i.e.,* detectable when the capacitor **320** is immersed in air) to "liquid" values *(i. e.,* detectable when the capacitor **320** is immersed in a liquid).

Moreover, a magnitude of the value of the electric voltage *Vs* depends on the conductivity of the liquid. Since liquid conductivity depends on the concentration of dissolved ions , it is possible to design the processing element *(e.g.,* the control unit **142)** in order to determine the conductivity of the liquid (in which the capacitor **320** of the conductivity probe **300** is immersed) by measuring the electric voltage *Vs* values between the conductor elements **305** and **310.**

For example, the control unit **142** may implement a measuring device such as the measuring device described in WO 2006/069898 by the same Applicant in order to perform liquid conductivity measurements by using the conductivity probe **300.**

It should be apparent to those skilled in the art, that probes comprising a fingered electrodes arrangement as the one of the conductivity probe **300** may be implemented in devices or parts of appliances other than filtering pitchers; generally, the insulated fingered electrodes arrangement may be implemented whenever there is the need to obtain an indication of the conductivity of a liquid without a direct electric contact between the probe element **300** (in particular the fingered free ends **305a** and **310a)** and the liquid.

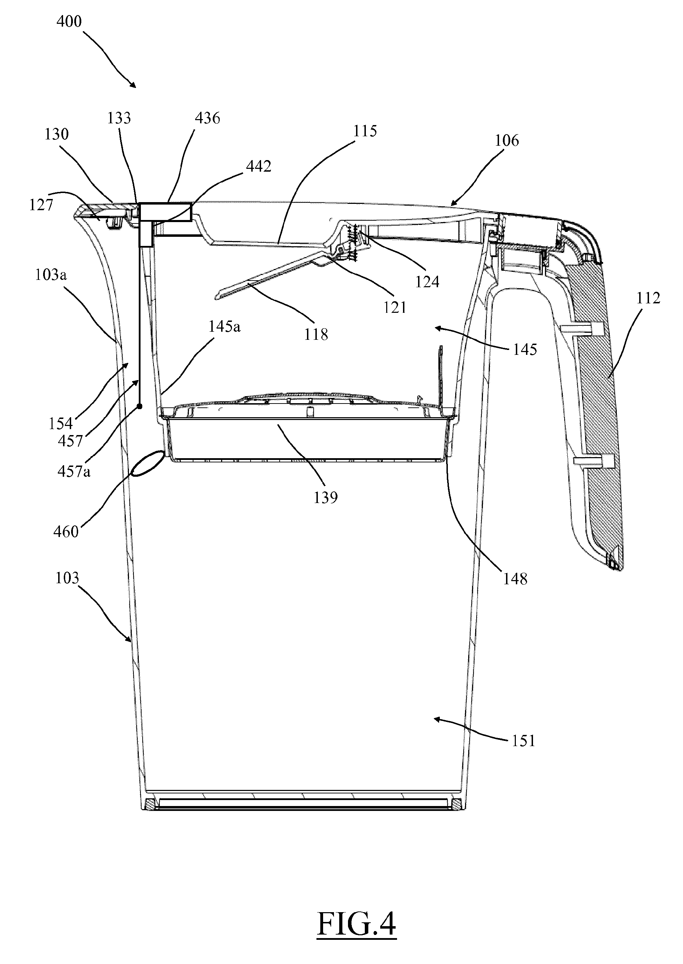

Turning now to **Figure 4,** it is a cross-sectional side view of another liquid container such as a filtering pitcher **400** comprising a sensing arrangement according to another embodiment of the present invention.

The filtering pitcher **400** differs from the filtering pitcher **100** previously described in what follows (wherein similar elements are denoted by similar numeral references).

In correspondence of the outlet conduit **154,** a flow-regulating element **460** (such as for example a bottleneck element) is provided (e.g., at the fluid connection of the outlet conduit **154** with the collection tank **151**). The flow-regulating element **460** is adapted to impose a predetermined flow rate *fr* to the liquid made to flow through the outlet conduit **154,** which acts as a (regulated) flowing section of the filtering pitcher **400,** when the filtering pitcher **400** is inclined in order to pour the filtered liquid out thereof (through the outlet opening **127**). For example, the flow-regulating element **460** may be formed as one-piece element with the filtering pitcher **100** or may be formed as a separate (and possibly removable) component adapted to be coupled with the filtering pitcher **400** at the fluid connection between the collection tank **151** and the outlet conduit **154.**

Preferably, in the filtering pitcher **400** a control unit **442** and a user interface element **436** are provided, preferably in the pitcher lid **106** in a position close to the outlet cap **130** *(e.g.,* facing the outlet conduit **154**). The control unit **442** has substantially the same characteristic and capability of the control unit **142** previously described as well as the user interface **436** has the same characteristics and functionalities of user interface **136** previously described.

In one embodiment of the present invention, a probe element **457,** such as non-limitative example the conductivity probe **200** or the conductivity probe **300** previously described, is provided coupled with the control unit **442.** The probe element **157** coupled (*e.g.*, electrically) with the control unit **442** provides a sensing arrangement adapted to obtain an information referred to one or more liquid characteristics (*e.g.*, conductivity).

The probe element **457** is provided at least partly within the outlet conduit **154** of the filtering pitcher **400.**

In one embodiment according to the present invention, the probe element **457** extends from the control unit **442** into the outlet conduit **154** with a sensing (free) end **457a** that is provided downstream flow-regulating element **460.** In this way, the sensing end **457a** of the probe element **457** results substantially submerged by a substantially constant flow of the filtered liquid any time the latter is poured from the collection tank **151** out of the filtering pitcher **400.**

Therefore, the control unit **442** may be configured to measure each generic (pouring) time interval $t'_j$ ($j = 1,...,J$; $J \geq 0$) during which the liquid is poured out of the filtering pitcher **400** passing through the outlet conduit **154.**

In order to evaluate a generic equivalent volume $Vol'_j$ of filtered liquid poured (and previously filtered by the removable liquid filtering unit **139**) out of the filtering pitcher **200** during a corresponding time interval $t'_j$, the latter is multiplied by the flow rate *fr* defined by the flow-regulating element **460.** The generic equivalent volume $Vol'_j$ is thus given by the integral of the flow rate *fr* over the time. By designing the flow-regulating element **460** in order to have a predetermined and substantially constant flow rate *fr,* the generic equivalent volume $Vol'_j$ calculation results simplified and is reduced to the following formula

$$Vol'_j = t'_j \times fr. \qquad\qquad (6)$$

A generic adjusted equivalent volume $Volc'_j$ may be determined by adjusting the corresponding volume $Vol'_j$

trough a corrective factor $\gamma_j$ determined on the basis of the liquid-related information (such as the water hardness which can be estimated through a liquid conductivity measure) variations over time; e.g., liquid-related information are registered over time and compared one another in order to define a trend over time of a filtering efficiency of the removable liquid filtering unit **139** on the basis of which the corrective factor $\gamma_j$ is computed. In other words, an indication of a derivative of the liquid-related information is used by the control unit **442** in order to determine the corrective factor $\gamma_j$.

Therefore the adjusted equivalent volume $Volc'_j$ may be calculated as:

$$Volc'_j = \gamma_j \times Vol'_j \qquad (7)$$

In one embodiment of the present invention (not shown), a temperature sensor may be provided in order to measure a temperature of the filtered liquid since the liquid temperature may affect liquid-related information such as the liquid conductivity. Therefore, the control unit **442** may be advantageously configured to use the measured temperature in order to provide an adjusted corrective factor $\delta_j$ taking into account also the temperature effects along with the variations over time of the liquid-related information to be used instead of the corrective factor $\gamma_j$ in the equation 6 for evaluating of the generic adjusted volume $Volc'_j$.

The generic adjusted volumes $Volc'_j$ of filtered liquid poured out of the filtering pitcher **400** are then added together in order to determine a total filtered volume $Vol'_T$ filtered by the removable liquid filtering unit **139** during its use in the filtering pitcher **400,** or

$$Vol'_T = \sum_{j=1}^{I} Volc'_j . \qquad (8)$$

The total filtered volume $Vol'_T$ is stored in the storage portion of the control unit **442.**

In this way, the filtering pitcher **400** according to an embodiment of the present invention is able to simply determine the total filtered volume $Vol'_T$ filtered by the removable liquid filtering unit **139** at any time during its use with the filtering pitcher **400.**

The total filtered volume $Vol'_T$ is compared (continuously or periodically or at any time its value is updated) with the exhaustion volume $Vol_{Ex}$ also stored in the storage portion of the control unit **442.**

If the total filtered volume $Vol'_T$ results to be equal to, or greater than, the exhaustion volume $Vol_{Ex}$, or

$$Vol'_T \geq Vol_{Ex}, \qquad (9)$$

the control unit **442** determines the exhaustion of the removable liquid filtering unit **139** and accordingly instructs the user interface **436** to output a corresponding exhaustion signal.

The filtering pitcher **400** according to the embodiment of the present invention is thus able to simply provide a reliable evaluation of the actual wearing out of the removable filter element **139** and accordingly of the exhaustion of its filtering capability due to the reaching of the exhaustion volume $Vol_{Ex}$ simply on the basis of the flow rate *fr* and of the time interval $t'_j$. Similarly as above, it is possible to take into account also the impact of the liquid quality (*e.g.*, water hardness in case the liquid is water and the removable filter element **139** includes ion-exchange resins) estimated by the control unit **442** by means of the probe element **457** immersed in the liquid being poured out of the filtering pitcher **400,** thus obtaining a more refined estimation

It should be noted that the exhaustion volume $Vol_{Ex}$ evaluation just described may be implemented in parallel with the exhaustion time-out evaluation performed by the timer element mentioned above. When the exhaust removable filter element **139** is replaced with a new one the total filtered volume $Vol'_T$ stored in the storage element is reset, *e.g.* by the user actuating a reset pushbutton provided in the user interface **136.**

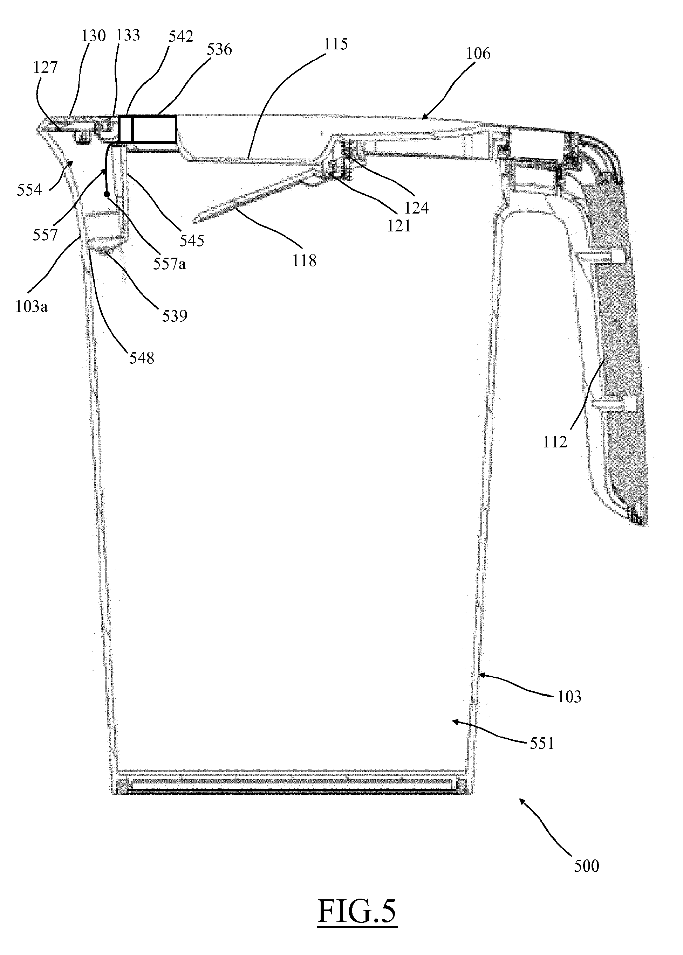

Turning now to **Figure 5,** it is a cross-sectional side view of a liquid container such as a filtering pitcher **500** comprising a sensing arrangement according to another embodiment of the present invention.

The filtering pitcher **500** differs from the filtering pitcher **400** previously described in what follows (wherein similar elements are denoted by similar numeral references).

The filtering pitcher **500** preferably comprises only a (liquid) collection tank **551** for receiving liquid poured into the filtering pitcher **500** through the inlet opening **115** of the pitcher lid **106.**

The collection tank **551** is fluidly connected to the outlet opening **127** by means of an outlet conduit **554.** Such outlet conduit **554** is defined by a portion of a body sidewall **503a** of the pitcher body 503 and by an internal sidewall **545.**

The outlet conduit **554** comprises a lower aperture **548** fluidly connecting the outlet conduit **554** with the collection tank **551.** The lower aperture **548** is designed in such a way to act as a seat for a removable liquid filtering unit **539** (*e.g.,* comprising active carbons and optionally ion-exchange resins); particularly, the removable liquid filtering unit **539** is adapted to completely close the lower aperture **548** once it is inserted therein. It should be apparent to those skilled in the art that the outlet conduit **554,** the lower aperture **548** and the removable liquid filtering unit **539** may be formed with any suitable shapes and sizes other than the shape and size shown in **Figure 5** as an example.

With such a structure of the filtering pitcher **500,** all the liquid poured out of the collection tank **551** passes through the removable liquid filtering unit **539** and is thereby filtered while made to flow through the outlet conduit **554,** which acts as a (regulated) flowing section for the pitcher **500,** and then reach the outside of the filtering pitcher **500** by gravity.

Similarly as in the filtering pitcher **400,** in the filtering pitcher **500,** a control unit **542** and a user interface element **536** are preferably provided in the pitcher lid **106** in a position close to the outlet cap **130** (*e.g.,* facing the outlet conduit **554).** The control unit **542** and the user interface **536** have substantially the same characteristic and capability of the control unit **142** and of the user interface **136,** respectively, previously described.

In one embodiment of the present invention, a probe element **557,** such as a non-limitative example the conductivity probe **200** or the conductivity probe **300** previously described, is provided coupled with the control unit **542.** The probe element **557** coupled (*e.g.*, electrically) with the control unit **542** provides a sensing arrangement adapted to obtain a liquid-related information (*e.g.*, conductivity).

The probe element **557** is provided at least partly within the outlet conduit **554** of the filtering pitcher **500.** Preferably, the probe element **557** extends from the control unit **542** into the outlet conduit **554** with a sensing (free) end **557a** that is provided downstream the removable liquid filtering unit **539.**

In this case, a flow rate of the liquid flowing into the outlet conduit **554** from the collection tank **551** is defined (*i.e.,* regulated) by a further predetermined filtering rate *ff'* associated with the removable liquid filtering unit **539** through which the liquid passes. In other words the removable liquid filtering unit **539** acts as flow-regulating element in the filtering pitcher **500.**

In this way, as in the previously described embodiment, the sensing end **557a** of the probe element **557** results substantially submerged by a substantially constant flow of filtered liquid any time the latter is poured from the collection tank **551** out of the filtering pitcher **500.**

Therefore, it is possible to evaluate a generic equivalent volume $Vol''_k$ ($k$ = 1,...,K; K $\geq$ 0) of filtered liquid (*i.e.,* a volume of liquid that has flowed through the outlet conduit **554)** by measuring (through the probe element **557)** each generic (pouring) time interval $t''_k$ during which the liquid is filtered and poured out of the filtering pitcher **500,** and configuring the control unit **542** for integrating the further filtering rate *ff'* over the time interval $t''_k$. Since the further filtering rate *ff'* is substantially constant over time (similarly, as in case of the filtering rate *ff* of the removable liquid filtering unit **139** of the filtering pitcher **100),** the equivalent volume $Vol''_k$ may be calculated as:

$$Vol''_k = t''_k \times ff'. \qquad (10)$$

Again, the equivalent volume $Vol''_k$ may be adjusted in an adjusted equivalent volume $Volc''_k$ by considering a corrective factor $\varepsilon_k$ determined on the basis of variations over time of the liquid-related information similarly as previously described with respect of the filtering pitcher **400.**

As before, if a temperature sensor (not shown) is provided, the control unit **542** may be advantageously configured to use the measured temperature in order to provide an adjusted corrective factor $\phi_k$ taking into account also the temperature effects along with the variations over time of the liquid-related information to be used instead of the corrective factor $\varepsilon_k$ for evaluating of the generic adjusted volume $Volc''_k$.

The generic adjusted volumes $Volc''_k$ of filtered liquid poured out of the filtering pitcher **500** are then added together in order to determine a total filtered volume $Vol''_T$ filtered by the removable liquid filtering unit **539** during its use in the filtering pitcher **500.** In this way, the filtering pitcher **500** according to an embodiment of the present invention is able to simply determine the total filtered volume $Vol'_T$ filtered by the removable liquid filtering unit **539** at any time during its use with the filtering pitcher **500.**

In order to determine whether the total filtered volume $Vol''_T$ equals, or exceeds, the exhaustion volume $Vol_{Ex}$, the total filtered volume $Vol''_T$ is compared (continuously or periodically or at any time its value is updated) with the exhaustion volume $Vol_{Ex}$ also stored in the storage portion of the control unit **542** (similarly as previously described). Therefore, it is possible to verify if the removable liquid filtering unit **539** reaches its exhaustion due to having filtered a liquid volume equal to or greater than the exhaustion volume $Vol_{Ex}$.

In the filtering pitcher **500,** the liquid is advantageously filtered only contextually to its pouring out of filtering pitcher **500** therefore waste of filtered liquid is substantially avoided (such in case of filtered liquid disposed for being stocked for a long time in the collection tank **151** of the filtering pitcher **100** or **400**). It should be noted that advantages provided by the structure of the filtering pitcher **500** having a filter seat **548** in correspondence of the outlet conduit **554** are independent from the presence of the probe element 557 and/or of the position of the control unit **542.**

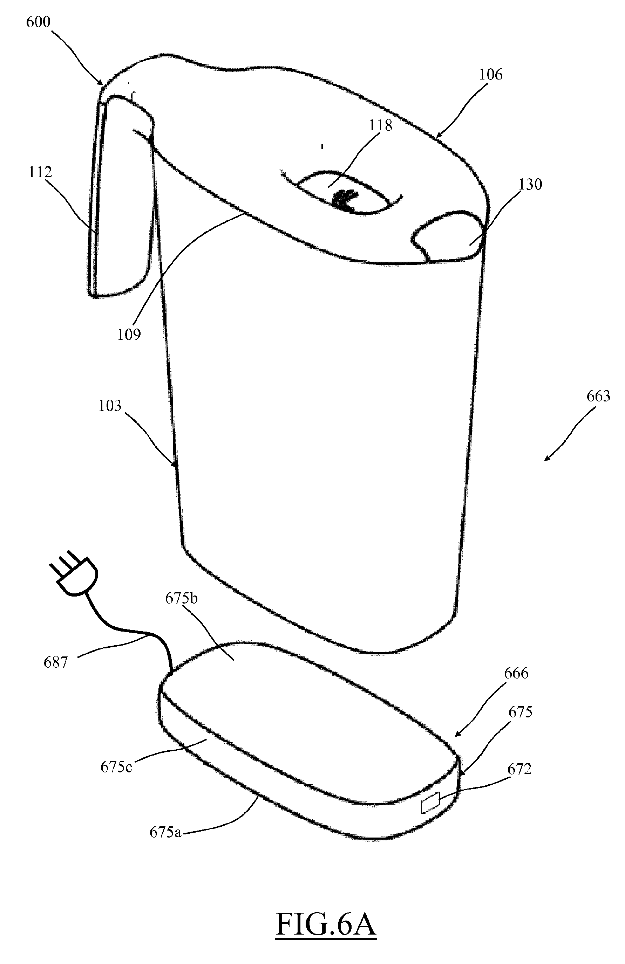

Considering now **Figures 6A-6C,** they are perspective view and cross sectional side view of a liquid container **663** comprising a container such as a filtering pitcher **600** and a control support **666** according to an embodiment of the present invention.

The filtering pitcher **600** differs from the filtering pitcher **100** previously described in what follows (wherein similar elements are denoted by similar numeral references).

Preferably, the filtering pitcher **600** is not provided with a control unit or with a user interface as those previously described. Conversely, the control support **666** is provided with a processing element, such as a control unit **669,** and a user interface **672** connected thereto. The control unit **442** has substantially the same characteristics and capabilities of the control unit **142** previously described and the interface **672** has substantially the same characteristics and capabilities of the user interface **136.**

By implementing the control unit **669** and the user interface **672** within the control support **666,** it is advantageously possible to feed them with electric energy from the power grid (not shown) by implementing a suitable power circuit **684** within the control support **666** and connectable to the power grid by a suitable connecting element, such as for example a power cord **687.** Thus cease the need for supply batteries for energizing the control unit **669** and the user interface **672,** and subsequent operation of battery substitution. Anyway, in one alternative embodiment of the invention (not shown) it is provided a control support that comprises a battery module as power source.

In one embodiment of the present invention, the control support **666** comprises a substantially parallelepiped-shaped body **675.** In its turn, the body **675** comprises a rest (main) surface **675a** adapted to contact a support plan (not shown, such as for example a tabletop) and a contact (main) surface **675b** opposite to the rest surface **675a** and separated by the latter by a side surface **675c.**

The contact surface **675b** is adapted to receive a bottom portion **678** of the filtering pitcher **600.** Optionally, the contact surface **675b** may have a shape (*e.g.,* comprising groves and/or recesses) adapted to provide a firm coupling between the filtering pitcher **600** and the contact surface **675b.** In one embodiment of the invention, such a firm coupling between the filtering pitcher and the contact surface of the control support allows a user to move the whole liquid container at once, as a single-piece element.

In an alternative embodiment of the invention, the control support and the liquid container are provided as a single piece element.

The control unit **669** is adapted to communicate wirelessly with other devices; e.g., by means of radio-frequency (RF) signals, or optical signals, by implementing suitable RF, or opto-, transceivers. Particularly, the control unit **669** is adapted to wirelessly communicate with sensing arrangements (described in the following) provided within the filtering pitcher **600** by means of a wireless coupling.

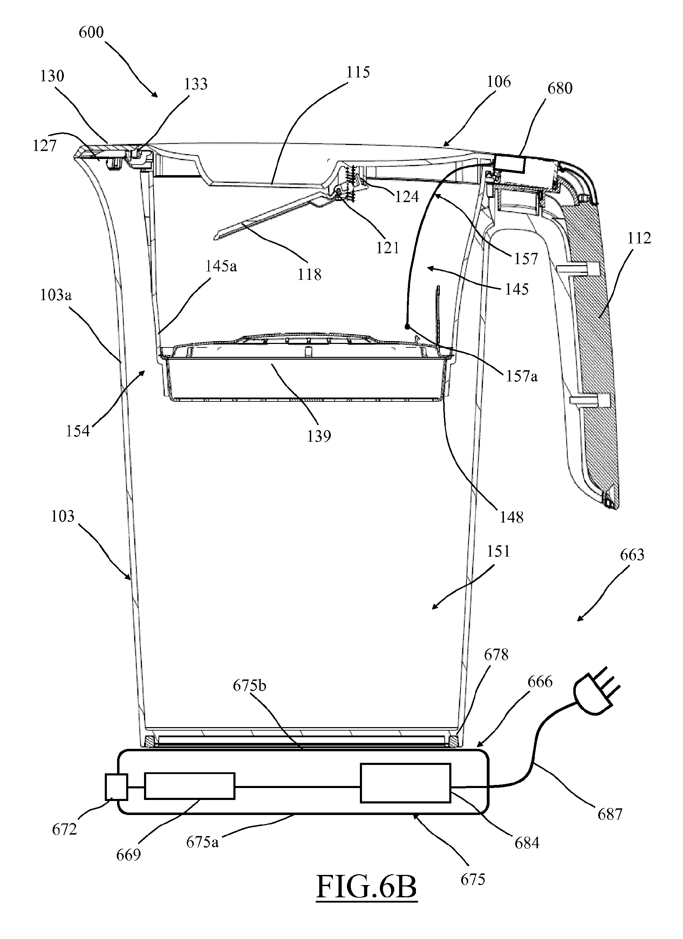

In one embodiment of the invention, illustrated in the cross-sectional side view of **Figure 6B,** the filtering pitcher **600** comprises a sensing arrangement featuring the probe element **157** previously described, and a communication unit **680** (for example, positioned within the pitcher body **103** similarly as the control unit **142** of **Figure 1B)** adapted to wirelessly communicating with the control unit **669.**

Similar to what previously described in relation with **Figures 1A** and **1B,** a sensing (free) end **157a** of the probe element **157** is provided substantially at a bottom portion **145a** of the pre-filtering tank **145.**

The communication unit **680** is adapted to acquire liquid-related information (such as liquid conductivity) through the probe element **157** immersed in the liquid flowing out from the pre-filtering tank **145** (through the removable liquid filtering unit **139)** and transmit such liquid-related information to the control unit **669** wirelessly. Therefore, it is possible to perform the evaluation of the reaching, or exceeding, the exhaustion volume $Vol_{Ex}$ substantially as previously described (with reference to the sensing arrangement of the filtering pitcher **100)** obtaining the same advantages.

Particularly, the control unit **669** may be configured to instruct the user interface **672** to output a filter exhaust (user-readable) signal when the total filtered volume $Vol_T$ become equal, or exceed, the exhaustion volume $Vol_{Ex}$.

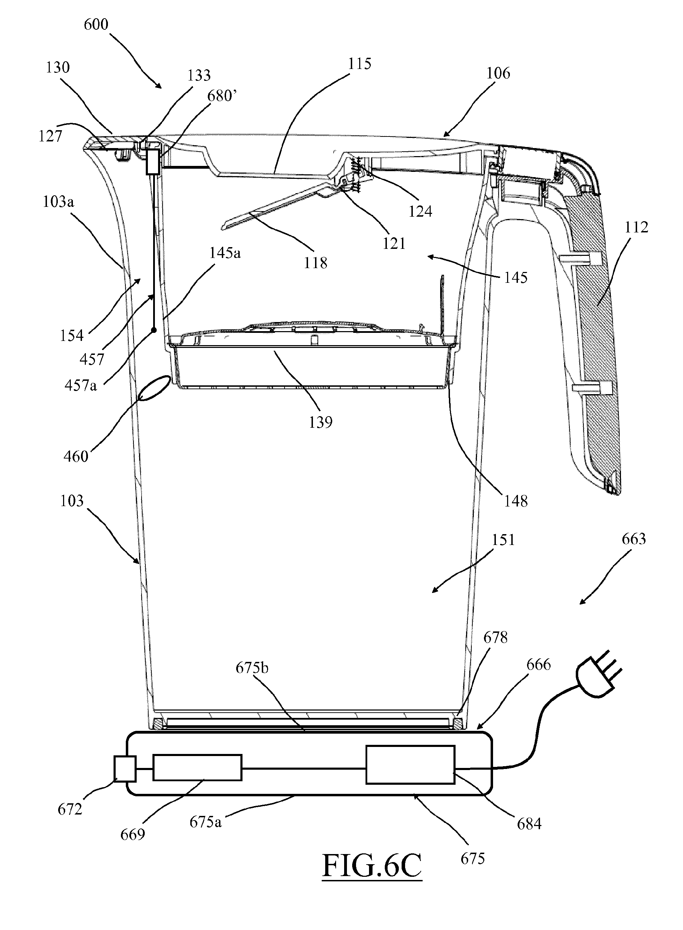

In another embodiment of the invention, illustrated in the cross-sectional side view of **Figure 6C,** the filtering pitcher **600** comprises another sensing arrangement featuring a different probe element, i.e. the probe element **457** previously described, and an alternative communication unit **680',** for example positioned within the pitcher lid **706** (similarly as the control unit **442** of the filtering pitcher **400).** Moreover the filtering pitcher **600** comprises the flow-regulating element **460** previously described (with reference to **Figure 4).**

Similar to what previously described in relation with **Figure 4,** the sensing (free) end **457a** of the probe element **457** is provided in the outlet conduit **154** downstream the flow-regulating element **460** (*e.g.,* on the portion of the body sidewall **103a** of the pitcher body **103** or on the portion of the tank sidewall **145a** of the pre-filtering tank **145** that define the outlet conduit **154).**

As in previous case, the communication unit **680'** is adapted to acquire liquid-related information (such as liquid conductivity) through the probe element **457** immersed in the liquid flowing out the filtering pitcher **400** and transmit such liquid-related information to the control unit **669** wirelessly. Therefore, it is possible to perform the evaluation of the reaching, or exceeding, of the exhaustion volume $Vol_{Ex}$ substantially as previously described (with reference to **Figure 5)** obtaining the same advantages.

Again, the control unit **669** may be configured to instruct the user interface **672** to output a filter exhaust (user-readable) signal when the total filtered volume $Vol'_T$ becomes equal, or exceeds, the exhaustion volume $Vol_{Ex}$. As above, when the exhaust removable filter element **139** is replaced with a new one, the total filtered volume $Vol'_T$ stored in the storage element is reset, *e.g.* by the user actuating a reset pushbutton provided in the user interface **672**.

It should be noted that the filtering pitcher **600** may be provided with other sensing arrangements, each one adapted to detect additional liquid-related information *(e.g.,* temperature) and to communicate it to the control support **666**. Such additional liquid-related information may be used to improve the accuracy of the estimate of the filter exhaustion and/or to be provided to the user through the user interface **672**.

In one embodiment of the invention (not shown), either the control support **666** or the pitcher **600** may comprise one or more additional contact-less sensing arrangements (*e.g.*, based on optical or impedance measurements) adapted to obtain liquid-related information about the liquid contained in the filtering pitcher **600,** when the latter rests on the former. Particularly, the support **666** may comprise contact-less power and data transfer means to power and communicate with wireless battery-less sensors or sensing systems enabling the detection of a liquid-related information and located in appropriate positions on the pitcher **600**. Particularly, sensors and sensing systems may include also RFID tags integrated in the pitcher **600** itself or in removable parts, *e.g.* the removable filter element **139,** enabling the detection of the serial number of each pitcher and/or part, its recognition and classification. Particularly, the RFID tag integrated in the removable filter element **139** allows recognising that the filter element **139** is original and the automatic reset of the value $Vol_T$ upon the substitution of the exhausted removable liquid filtering unit **139** with a new one.

Moreover, the control support **666** may comprise one or more liquid-treating devices (*e.g.*, an ozone generator and/or a UV disinfection device) for treating the liquid contained in the filtering pitcher **600,** when the latter rests on the former.

In an alternative embodiment of the present invention (not shown), an alternative liquid container comprises a control support similar to the control support **666** just described and a filtering pitcher similar to the filtering pitcher **500.**

It should be apparent to those skilled in the art that the advantages brought by the liquid container **603** comprising the filtering pitcher **600** and the control support **666** are independent from the method of evaluating the volume of filtered liquid herein disclosed.

Obviously, features of the various embodiments of filtering pitchers herein described might be combined one another. Moreover, in alternative embodiments of the present invention, filtering pitchers featuring both a probe element in the pre-filtering tank and a flow-regulating element and the probe element in the outlet conduit may be provided, in order to obtain a double evaluation of the volume of liquid filtered and of the liquid-related information that can be combined (*e.g.*, differentially) to obtain a more accurate estimate of the removable liquid filtering unit exhaustion.

It should be noted that, although liquid container herein described are all pitcher for filtering a drinkable liquid, the sensing arrangement and the flow-regulating element herein described may be implemented in other typologies of liquid container in order to determine a volume of liquid flowed through the flow-regulating element.

**Claims**

1.  A liquid container **(100; 400; 500; 663)** for containing a liquid comprising a seat **(148; 548)** for housing a liquid filtering unit **(139; 539)** adapted to filter said liquid, a flowing section **(148; 154; 554)** through which said liquid is made to flow and a sensing arrangement comprising at least one probe element **(157; 200; 300; 457; 557)** responsive to the presence of liquid and coupled or couplable with a data processing element **(142; 442; 552; 669),**
    **characterized in that**
    the liquid container further comprises a liquid flow-regulating element **(139; 460; 539)** associated with the flowing section **(148; 154; 554)** and adapted to impose a predetermined flow rate *(ff, ff', fr)* to a flow of liquid flowing through the flowing section **(148; 154; 554),** and wherein the sensing arrangement is configured to measure a time interval $(t_i, t'_j, t''_k)$ during which the liquid flows through the flowing section **(148; 154; 554)** at said predetermined flow rate, the data processing element **(142; 442; 552; 669)** being configured to calculate a volume $(Vol_i, Vol'_j, Col''_k)$ of liquid flowed through the flowing section **(148; 154; 554)** based on the measured time interval $(t_i, t'_j, t''_k)$ and the predetermined flow rate *(ff, ff', fr)*, said volume of flowed liquid being related to the volume of liquid filtered by said liquid filtering unit.

2.  The liquid container **(100; 400; 500; 663)** according to claim 1, wherein the flow-regulating element **(139; 539)** comprises the liquid filtering unit **(139; 539).**

3. The liquid container **(100; 663)** according to claim 2, further comprising an inlet **(115)** for introducing a liquid in the liquid container **(100; 663),** said inlet **(115)** communicating with a liquid pre-filtering tank **(145),** and a liquid collection tank **(151)** downstream the liquid pre-filtering tank **(145)** with respect to said inlet **(115)** and in fluid communication with said liquid pre-filtering tank **(145)** through the flowing section **(148),** the flowing section **(148)** being adapted to act as the seat of the liquid filtering unit **(139),** and
wherein the probe element **(157; 200; 300)** comprises a sensing end **(157a; 220; 305a,310a)** positioned in correspondence of an upper surface of the liquid filtering unit **(139)** when placed in the flowing section **(148)** in such a way to be submerged by liquid of the flow flowing through the flowing section **(148)** during said time interval ($t_i$).

4. The liquid container **(400; 500; 663)** according to claim 1 or 2, wherein the flowing section **(154; 554)** comprises an outlet conduit **(154; 554)** fluidly connecting a liquid collection tank **(151; 551)** with a dispensing outlet **(127)** of the liquid container **(400; 500; 663),** and
wherein the flow-regulating element **(460; 539)** is provided in a position along the outlet conduit, and the sensing element **(200; 300; 457; 557)** comprises a sensing end **(220; 305a,310a; 457a; 557a)** provided downstream the flow-regulating element **(460; 539)** in such a way to be submerged by liquid of the flow flowing through the flowing section **(154; 554)** during said time interval ($t'_j, t''_k$).

5. The liquid container **(400; 663)** according to claim 4, further comprising an inlet **(115)** for introducing a liquid in the liquid container **(400; 663),** wherein said liquid collection tank **(151)** is downstream, with respect of said inlet **(115),** the seat **(148)** adapted to house the liquid filtering unit **(139).**

6. The liquid container **(100; 400; 500; 663)** according to any one of the preceding claims, wherein the probe element **(200)** comprises at least one pair of conductive rods **(205, 210),** an insulating casing **(215)** adapted to enclose the rods leaving an end of each rod exposed, the ends of the rods defining said sensing end **(220)** of the probe element, and a coupling end, opposite to the sensing end, operatively coupled or couplable with said data processing element **(142; 442; 552; 669).**

7. The liquid container **(100; 400; 500; 663)** according to any one of the preceding claims, wherein the probe element **(300)** comprises at least one pair of conductor elements **(305, 310),** insulating elements **(315, 325)** adapted to electrically insulate the conductor elements **(305, 310)** from the environment surrounding the probe element **(300),** each conductor element comprising a respective fingered electrode **(305a, 310a)** that defines said sensing end **(305a,310a)** of the probe element **(300),** and a coupling end opposite to the sensing end operatively coupled or couplable with said data processing element **(142; 442; 552; 669),** and
wherein the fingered electrodes **(305a, 310a)** are interdigited and electrically insulated one with respect to the other.

8. The liquid container **(663)** according to any one of the preceding claims, further comprising a support **(666)** having a body **(675)** comprising a rest surface **(675a)** adapted to stand on a support plan, a contact surface **(675b)** opposite to the rest surface and separated from the latter by a side surface **(675c),** and a vessel-like element **(103)** comprising said flowing section **(148; 154; 554),** and
wherein the contact surface **(675c)** is adapted to couple with a bottom portion **(678)** of the vessel-like element **(103).**

9. The liquid container **(663)** according to claim 8, wherein the support **(666)** comprises the data processing element **(669)** and the sensing arrangement further comprises a communication unit **(680; 680'),** the communication unit **(680; 680')** being adapted to wirelessly communicate at least said time interval ($t_i, t'_j, t''_k$) to the data processing element **(669).**

10. The liquid container **(100; 400; 500; 663)** according any one of the preceding claims, wherein the sensing arrangement is configured to provide liquid-related information regarding the liquid in addition to said measure of the time interval ($t_i, t'_j, t''_k$).

11. The liquid container **(100; 400; 500; 663)** according to claim 10, wherein the data processing element **(142; 442; 552; 669)** is further configured to calculate an adjusted volume ($Volc_i, Volc'_j, Volc''_k$) on the basis of said volume ($Vol_i, Vol'_j, Vol''_k$) and on the liquid-related information obtained by the sensing arrangement wherein said adjusted volume ($Volc_i, Volc'_j, Volc''_k$) is calculated by applying to said volume ($Vol_i, Vol'_j, Vol''_k$) a corrective factor ($\alpha_i, \beta_i, \gamma_j, \delta_j, \varepsilon_k, \phi_k$) taking account of at least one of the following liquid-related information:

- a conductivity of the liquid;
- a temperature of the liquid;

- an impedance of the liquid;
- a hardness of the liquid;
- a pH of the liquid;
- a transmittance of the liquid, and
- a turbidity of the liquid.

12. The liquid container (100; 400; 500; 663) according to any one of the preceding claims, wherein the liquid filtering unit (139; 539) comprises a removable liquid filtering unit (139; 539), and wherein the data processing element (142; 442; 552; 669) is configured to evaluate an exhaustion of said removable liquid filtering unit (139; 539) based on a total volume ($Vol_T$, $Vol'_T$, $Vol''_T$) of liquid flowed through said flow-regulating element starting from a provision of the removable filtering unit (139; 539) in the liquid container (100; 400; 500; 663).

13. The liquid container (100; 400; 500; 663) according to any one of the preceding claims, wherein the liquid container (100; 400; 500; 663) comprises a filtering pitcher (100; 400; 500; 600) adapted to filter a drinkable liquid.

14. A method for evaluating a volume of liquid filtered by a liquid filtering unit provided in a liquid container (100; 400; 500; 666), the method comprising the steps of:

- providing a flowing section (148; 154; 554) in said liquid container;
- imposing a predetermined flow rate (ff, ff',fr) to a flow of liquid flowing through the flowing section (148; 154; 554);
- measuring a time interval ($t_i$, $t'_j$, $t''_k$) for which there is a flow of liquid flowing through the flowing section (148; 154; 554) at said predetermined flow rate, and
- calculating a volume ($Vol_i$, $Vol'_j$, $Vol''_k$) of the liquid that has flowed through the flowing section (148; 154; 554) based on said measured time interval ($t_i$, $t'_j$, $t''_k$) and said predetermined flow rate (ff, ff', fr), said volume of flowed liquid being related to the volume of liquid filtered by said liquid filtering unit.

15. The method according to claim 14, further comprising the steps of

- calculating a total volume ($Vol_T$, $Vo'l_T$, $Vol''_T$) of liquid that has flowed out through the flowing section (148; 154; 554);
- comparing the total volume ($Vol_T$, $Vol'_T$, $Vol''_T$) with a volume threshold ($Vol_{Ex}$), and
- whether the total volume ($Vol_T$, $Vol'_T$, $Vol''_T$) is greater than the volume threshold ($Vol_{Ex}$), providing an indication of the reaching/trespassing of said volume threshold ($Vol_{Ex}$).

## FIG.1A

100

130    133    115    106    142    136

127    124

118    121

145a

103a

154

403    139    145    157    157a    148

112

151

## FIG.1B

200

215

205

210

## FIG.2A

200

205  210

215

220

## FIG.2B

310

300

315

305

310a

305a

315

## FIG.3A

300

325

## FIG.3B

FIG.4

**FIG.5**

FIG.6A

**FIG.6B**

**FIG.6C**

Europäisches
Patentamt

European
Patent Office

Office européen
des brevets

## EUROPEAN SEARCH REPORT

Application Number

EP 14 17 4098

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2001/023843 A1 (SENNER KURT C [US] ET AL) 27 September 2001 (2001-09-27) <br> * figures 1,2,3,13 * <br> * paragraph [0003] * <br> * paragraph [0008] * <br> * paragraph [0013] * <br> * paragraph [0029] - paragraph [0032] * <br> * paragraph [0047] - paragraph [0053] * <br> ----- | 1-15 | INV. <br> C02F1/00 <br> C02F1/28 <br> C02F1/42 <br> B01D35/143 <br><br> ADD. <br> C02F1/32 <br> C02F1/78 |
| X | EP 0 880 986 A2 (EVERPURE [US]) 2 December 1998 (1998-12-02) <br> * column 1, line 1 - line 6 * <br> * figures 1-5 * <br> * column 2, line 32 - column 3, line 23 * <br> * column 3, line 52 - column 8, line 5 * <br> ----- | 1,14 | |
| A | WO 2010/142473 A1 (LAICA SPA [IT]; MORETTO MAURIZIO [IT]) 16 December 2010 (2010-12-16) <br> * the whole document * <br> ----- | 1-15 | |
| A | WO 03/084875 A1 (MECOSWISS MECHANISCHE COMPONEN [DE]; SCHROTT HARALD [DE]; WAWRLA ANDRE) 16 October 2003 (2003-10-16) <br> * the whole document * <br> ----- | 1-15 | **TECHNICAL FIELDS SEARCHED (IPC)** <br><br> C02F <br> B01D |
| A | WO 2009/015680 A1 (SELWYN CORPORATE LTD; ALEXANDROU OLGA [CY]) 5 February 2009 (2009-02-05) <br> * the whole document * <br> ----- | 1-15 | |

The present search report has been drawn up for all claims

| Place of search | Date of completion of the search | Examiner |
|---|---|---|
| The Hague | 6 October 2014 | Zsigmond, Zoltán |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 14 17 4098

This annex lists the patent family members relating to the patent documents cited in the above-mentioned European search report.
The members are as contained in the European Patent Office EDP file on
The European Patent Office is in no way liable for these particulars which are merely given for the purpose of information.

06-10-2014

| Patent document cited in search report | Publication date | Patent family member(s) | Publication date |
|---|---|---|---|
| US 2001023843 A1 | 27-09-2001 | NONE | |
| EP 0880986 A2 | 02-12-1998 | AU 737305 B2 | 16-08-2001 |
| | | AU 6598398 A | 19-11-1998 |
| | | CA 2237375 A1 | 16-11-1998 |
| | | EP 0880986 A2 | 02-12-1998 |
| | | JP H10337421 A | 22-12-1998 |
| | | US 5888381 A | 30-03-1999 |
| WO 2010142473 A1 | 16-12-2010 | EP 2440494 A1 | 18-04-2012 |
| | | TW 201111027 A | 01-04-2011 |
| | | WO 2010142473 A1 | 16-12-2010 |
| WO 03084875 A1 | 16-10-2003 | AU 2003233929 A1 | 20-10-2003 |
| | | CN 1646434 A | 27-07-2005 |
| | | DE 10214846 A1 | 16-10-2003 |
| | | DE 10391197 D2 | 03-03-2005 |
| | | EP 1490302 A1 | 29-12-2004 |
| | | US 2006011523 A1 | 19-01-2006 |
| | | WO 03084875 A1 | 16-10-2003 |
| WO 2009015680 A1 | 05-02-2009 | AU 2007357009 A1 | 05-02-2009 |
| | | CN 101827789 A | 08-09-2010 |
| | | EP 2173666 A1 | 14-04-2010 |
| | | JP 5384497 B2 | 08-01-2014 |
| | | JP 2010534565 A | 11-11-2010 |
| | | US 2010282692 A1 | 11-11-2010 |
| | | WO 2009015680 A1 | 05-02-2009 |

EPO FORM P0459

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1484097 A
- US 8171802 B

- WO 2006069898 A